# EUROPEAN PATENT APPLICATION

(11) **EP 0 630 147 A1**
(43) Date of publication of application: **21.12.1994**
(21) Application number: 94109299.1
(22) Date of filing: 16.06.1994
(51) Int. Cl.: H04N 1/387

(54) **An image forming apparatus capable of editing an original image**

(30) Priority: 17.06.1993 JP 146535/93
(71) Applicant: MITA INDUSTRIAL CO. LTD., Osaka-shi Osaka-fu 540 (JP)
(72) Inventor: Takada, Akihiro, c/o Mita Industrial Co., Ltd., Osaka-shi, Osaka-fu (JP); Fukano, Masahiko, c/o Mita Industrial Co., Ltd., Osaka-shi, Osaka-fu (JP); Kagawa, Tetsuya, c/o Mita Industrial Co., Ltd., Osaka-shi, Osaka-fu (JP); Izumi, Koji, c/o Mita Industrial Co., Ltd., Osaka-shi, Osaka-fu (JP); Kageyama, Hiroshi, c/o Mita Industrial Co., Ltd., Osaka-shi, Osaka-fu (JP)
(74) Representative: Müller-Boré & Partner Patentanwälte

(57) **Abstract**

An image forming apparatus includes an image processor for processing an original image in a desired manner, the image processor being provided with an original document holder for holding an original document, an image editing device for editing an original image on the basis of original image coordinates defined by the document holder, and a secondary original document producing device for automatically producing a secondary original document equal or smaller than the size of the original document holder when the original document is larger than the original document holder. This apparatus need not a number of original document holders of various sizes.

## Description

### BACKGROUND OF THE INVENTION

This invention relates to an image forming apparatus capable of producing a desired copy image by editing an image on an original document.

In conventional image forming apparatus capable of editing an image on an original document to produce a desired copy image, an original document is placed on an editing pad, and coordinates defining an area to be edited are determined and the coordinates are entered into the image forming apparatus.

In the case of copying an original image by masking or hiding a specified rectangular area of the original image, for example, an operator places the original document on an editing pad and determines coordinates of two opposite corners of a specified rectangular area. The operator enters the coordinates of the two corners into the image forming apparatus. The image forming apparatus produces a copy image with the specified rectangular area being masked.

However, in such conventional image forming apparatus. it is necessary to use an editing pad having the same size as the original document. In the case of editing an image on an original document A0 size or largest standard size, for example, it is required to prepare an editing pad of A0 size identical to the size of the original document. Also, a large space is necessary to store the largest editing pad of A0 size when not used. This is economically wasteful.

### SUMMARY OF THE INVENTION

It is an object of the present invention to provide an image forming apparatus which has overcome the above-mentioned drawbacks.

It is another object of the present invention to provide an image forming apparatus which makes it possible to edit and copy an image on a large original document without use of a large editing pad equal or larger than the original document.

According to the present invention, an image forming apparatus comprises: image reading means for reading an image on an original document of a first size; image processor means for processing the read original image in a desired manner, the image processor means including: original document holding means for holding an original document, the original document holding means having a coordinate system for defining a specific position of the original document, and the original document holding means having a second size; image editing means for editing the read original image on the basis of positions defined by the coordinate system of the original document holding means; secondary original document producing means for producing a secondary original document having a size equal or smaller than the second size and carrying a reduced original image, the reduced original image having the same reduction ratio as the secondary original document; and image forming means for forming the processed original image on a copy paper.

It may be appreciated to further provide the image processor means with judging means for judging whether the first size is greater than the second size; and controlling means responsive to the judging means for controlling the secondary original document producing means to produce a secondary original document when the first size is greater than the second size.

Further, the image processor means may be provided with conversion means for converting coordinates defining a specific position of the secondary original document to coordinates defining an equivalent position of the original document.

The conversion means may be constructed by memory means for storing a coordinate conversion table corresponding to the reduction ratio; and calculation means for calculating the equivalent coordinates of the original document based on the coordinate conversion table.

Also, it may be appreciated to further provide the image processor with operable means for executing a plurality of selective image processing types; selecting means for selecting a desired one of the plurality of image processing types; and displaying means for presenting an operator a screen for image processing type selection.

With thus constructed image forming apparatus, there is provided the secondary original document producing means for producing a reduced secondary original document equal or smaller than the size of the original document holding means. Accordingly, this image forming apparatus need not a number of original document holders corresponding to original documents of various sizes, and assures a wide variety of editings with a single original document holding means.

If the image processor means is provided with the size judging means and the secondary original document producing controller, a secondary original document can be automatically produced.

The image processor means is preferably further provided with the coordinate conversion means. The conversion means may include the memory means for storing a conversion table and the calculation means for calculating equivalent coordinates. Accordingly, the original document size can be automatically restored from the secondary original document. Original image editing can be promptly performed on the size of original document with the single original document holding means.

Also, the image processor means is preferably provided with the displaying means for presenting an operator a screen for image processing type selection. An operator can execute selection of a desired image processing type easily and smoothly.

These and other objects, features and advantages of the invention will become more apparent after having read the following detailed description of preferred embodiments. which are illustrated in drawings.

### BRIEF DESCRIPTION OF THE DRAWINGS

Fig. 1 is a perspective view of a copying machine provided with an image editing device as an embodiment of the invention;
Fig. 2 is a schematic sectional view showing a principal construction of the copying machine;
Fig. 3A is a side elevation view of an editing pad used in the copying machine;
Fig. 3B is a top plan view of the editing pad;
Fig. 4 is a block diagram showing a control system of the copying machine;
Figs. 5A-5H are screens which appear on a display window of the copying machine when an image editing mode is activated and an editing type "MASKING" is selected;
Fig. 6 is a flowchart showing an operation of the image forming apparatus; and
Figs. 7A-7H are screens which appear on the display window when an editing type "TRIMMING" is selected in the image editing mode.

### DETAILED DESCRIPTION OF THE PREFERRED EMBODIMENT OF THE INVENTION

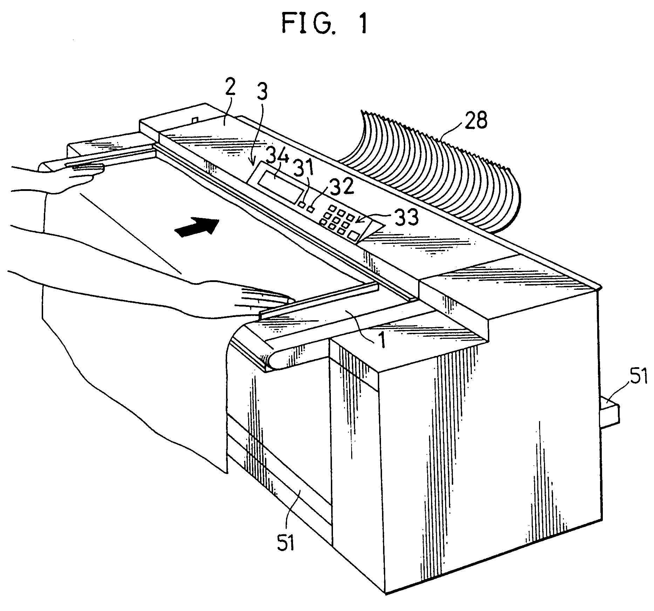

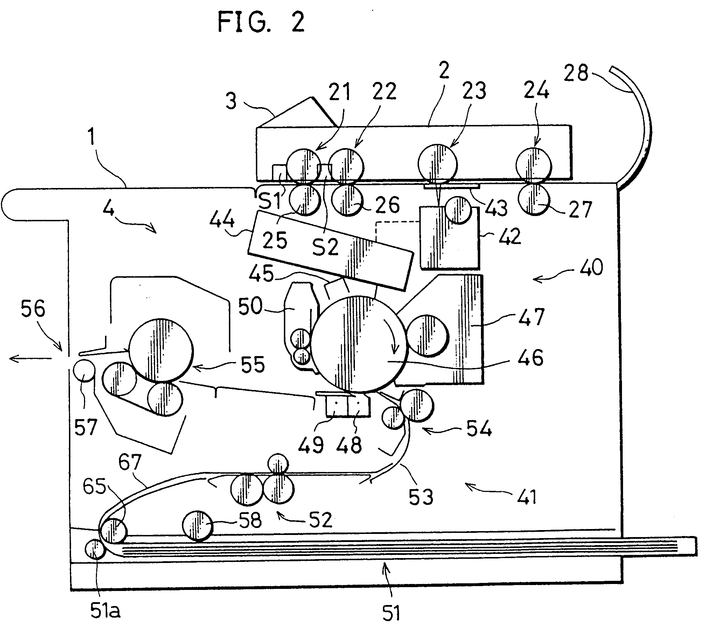

A general construction of a copying machine provided with an image editing device will be described with reference to Figs. 1 and 2. Fig. 1 is a perspective view showing an external appearance of the copying machine. Fig. 2 is a schematic sectional view showing main internal elements of the copying machine.

The copying machine comprises an original document placement section 1 at an upper front portion, an original document feed section 2 at an upper rear portion, an operation panel 3 on a top of the original document feed section 2 and an image forming section 4 inside the copying machine.

The original document feed section 2 automatically feeds an original document which is manually inserted into a space between the placement section 1 and the feed section 2 as shown in Fig. 1. The inserted original document is detected by an original document sensor S1 when being inserted into the space. The original document is then fed rearward by rollers 21-27. An original document registration sensor S2 is provided between the roller 21 and 22 and adapted for detecting the feeding time of original documents. The original document is discharged by the original document feed rollers 24, 27 and turned forward by an original document discharge guide 28. The original document feed roller 23 is located just at an exposure position. An outside surface of the roller 23 is colored with white. This white portion serves as a reference for shading correction.

The image forming section 4 includes an image forming assembly 40 and a copy paper feed assembly 41. Indicated at 42 is an exposure unit for scanning the original document through a contact glass 43 and receiving light reflected from the original document. Indicated at 44 is a light projecting device including a laser optical unit and a polygon mirror for main scanning. The light projecting device 44 projects a laser beam to a surface of a photosensitive drum 46. The surface of the photosensitive drum 46 is uniformly charged to a specified potential by a charger 45. The laser beam is modulated by image data which is produced by the exposure unit 42.

Upon receiving the laser beam, the photosensitive drum surface produces an electrostatic latent image. The electrostatic latent image is converted into a visible toner image by a developing unit 47 and the toner image is transferred onto a sheet of copy paper by an image transfer unit 48. As being fed further, the copy paper sheet is separated from the photosensitive drum 46 by a sheet separator 49.

Indicated at 50 is a cleaning unit for removing residual toner particles from the surface of the photosensitive drum 46 after the toner image is transferred onto the copy paper sheet.

Next, a detailed construction of the copy paper feed assembly 41 will be described. Indicated at 51 is a paper cassette for containing a stack of copy paper sheets. This paper cassette 51 is mounted on and dismounted from the copying machine 1 by sliding in and out from the front of the copying machine.

A copy paper sheet is fed out by a forward roller 58. Rollers 51a and 65 serve to prevent multifeed and to assuredly feed a single copy paper sheet to a feed guide 67. The copy paper sheet is advanced to a pair of registration rollers 54 through a feed guide 53 by feed rollers 52.

In synchronism with the detection of the registration sensor S2, the registration roller pair 54 feeds the copy paper sheet into the image transfer path adjacent to the photosensitive drum 46. The toner image is transferred from the photosensitive drum 46 onto the fed copy paper sheet and fixed onto the sheet with heat by a fixing unit 55. The copy paper sheet carrying the copy image is then discharged from a discharge opening 56 by a discharge roller 57.

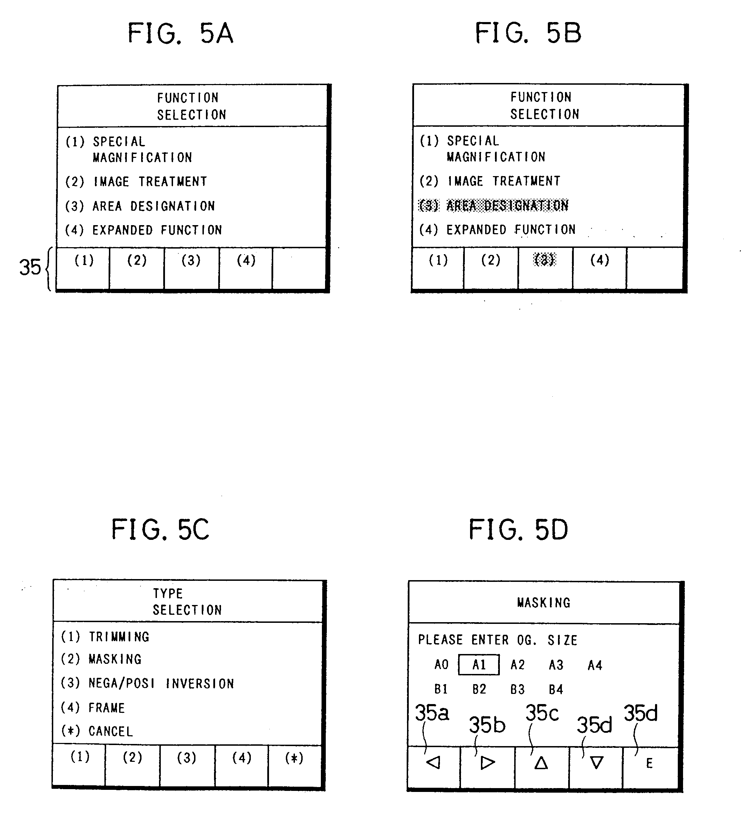

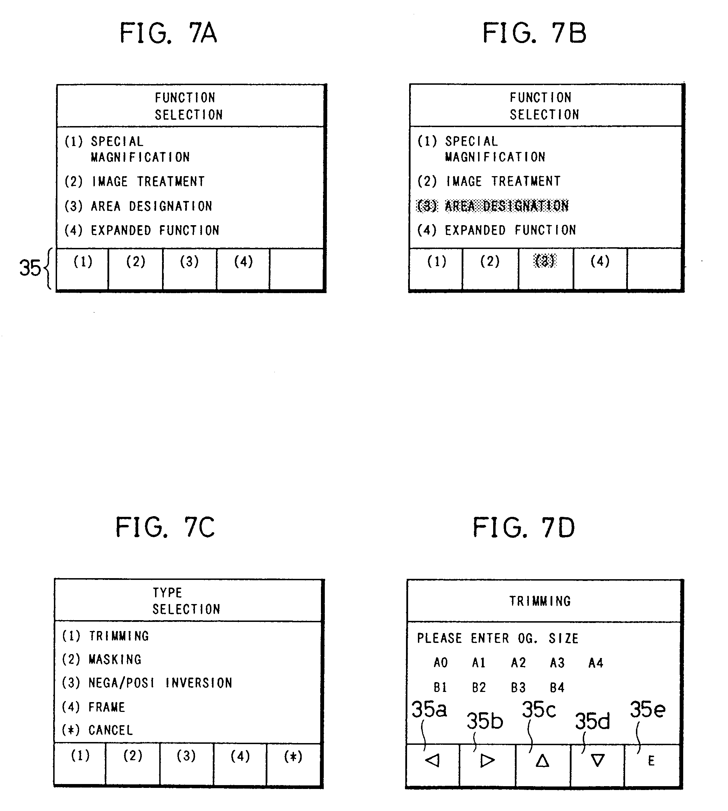

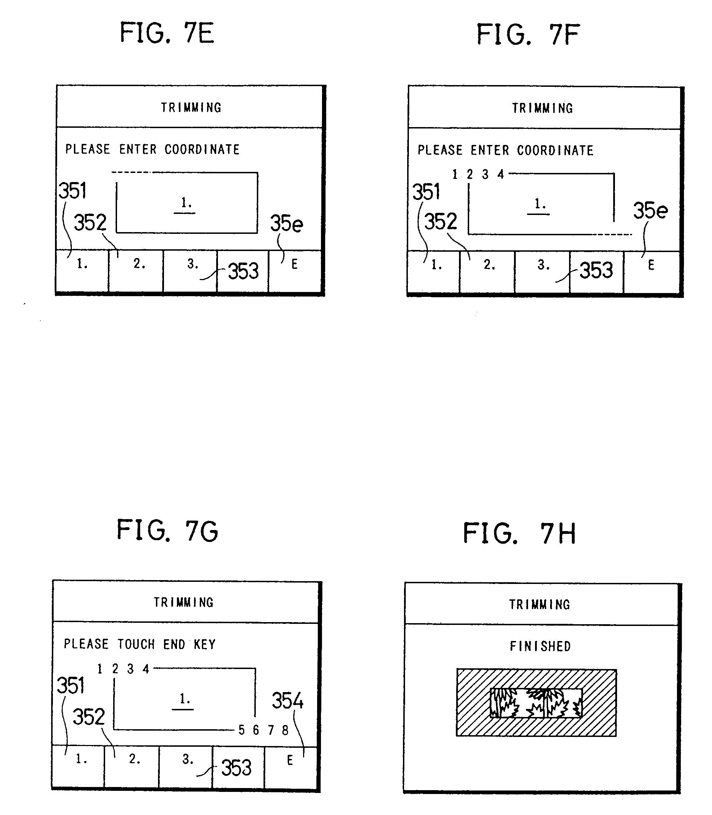

The operation panel 3 includes, as shown in Fig. 1, a mode key 31, a function key 32, numeric keys 33 and a display window 34. The mode key 31 is adapted for changing over an usual copying mode and an image editing mode of the copying machine. The function key 32 is adapted for selecting a desired image editing function. The numeric keys 33 are adapted for entering the number of copies, coordinates of an image editing area, etc. The display window 34 includes a liquid crystal display panel to present such information as image editing functions. There is provided a touch-screen portion 35 having a plurality of touchpads at the bottom of the display window 34 as shown in Figs. 5A-5G, 7A-7G. A desired function is selected by touching an appropriate touchpad of the touch-screen portion 35 with a finger. The touchpad is also used when an operator enters the size of an original document or coordinates of an image area to be edited.

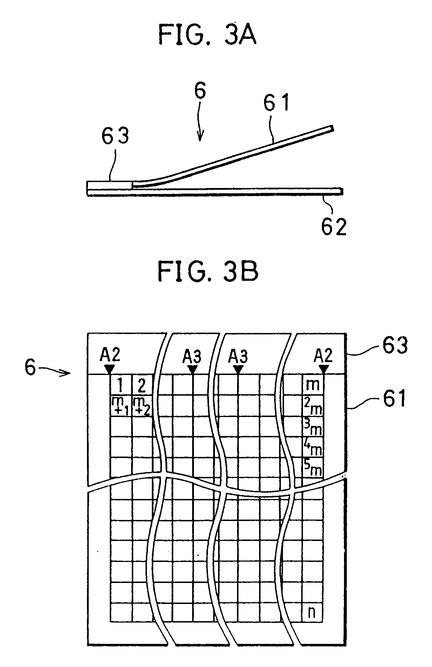

Figs. 3A and 3B are, respectively, a side view and a top plan view of an editing pad 6 for designating a specific image editing area. The editing pad 6 includes a transparent sheet 61, a mounting base 62, and a joint portion 63 for connecting the transparent sheet 61 and mounting base 62 with each other. The mounting base 62 and joint portion 63 are made of rigid synthetic resin material.

As shown in Fig. 3B, there are markings for different copy paper sizes on the surface of the joint 63. These markings are used to align an original document of a specified size in position. The transparent sheet 61 is made of a flexible synthetic resin material. and printed with a grid of small squares, as shown in Fig. 3B, like the so-called section paper. To define particular locations within the grid, individual squares are sequentially marked with numbers 1 through n, starting at the upper-left corner and ending at the lower-right corner.

An original document is placed between the transparent sheet 61 and mounting base 62 of the editing pad 6 in such a manner that two corners of the original document align with appropriate copy paper size markings on the joint portion 63. Coordinates of a desired image editing area is then defined with reference to markings on the transparent sheet 61. In short, the editing pad 6 provides convenient means for designating an editing area within the original document image.

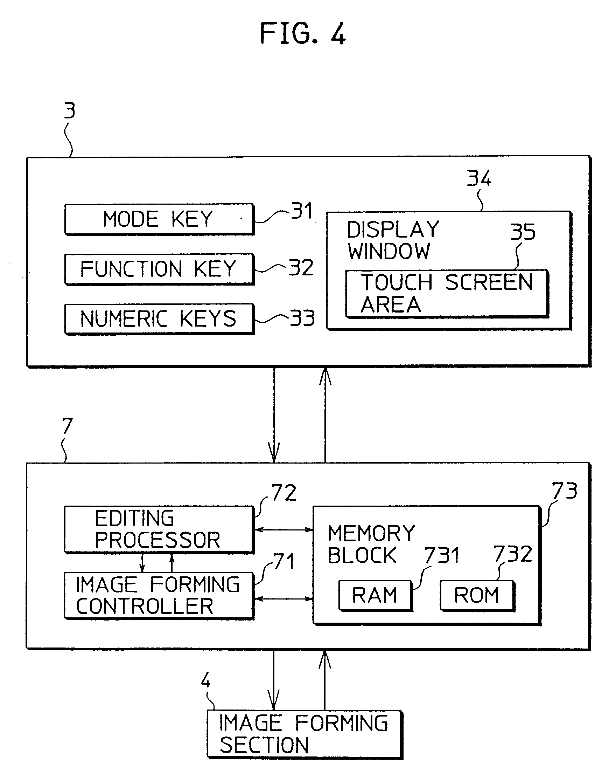

Referring now to a block diagram of Fig. 4, a control system of the copying machine will be described below. There is provided a control unit 7 configured with a microcomputer. The control unit 7 controls a whole operation of the copying machine, and includes an image forming controller 71, an image editing processor 72, and a memory block 73.

The image forming controller 71 totally controls operations of individual elements of the image forming section 4. As an example, the image forming controller 71 activates the charger 45 and registration rollers 54 in response to an output signal of the original document registration sensor S2 to feed a copy paper sheet and transfer a toner image onto the copy paper sheet at a synchronized timing.

When image editing data is entered in the image editing mode, the image forming controller 71 sets control data for the light projecting assembly 44 to properly control the copying process in accordance with coordinates of a designated image editing area and other data fed from the image editing processor 72. The image editing processor 72 controls image editing operations.

Next, image editing operations performed by the image editing processor 72 will be described with reference to Figs. 5A-5H illustrating screens presented on the display window 34.

When the copying machine is set in the image editing mode by pressing the mode key 31, the image editing processor 72 causes the display window 34 to present a function selection menu screen shown in Fig. 5A. On the function selection menu screen are presented the following selective four functions:
(1) SPECIAL MAGNIFICATION;
(2) IMAGE TREATMENT;
(3) AREA DESIGNATION;
(4) EXPANDED FUNCTION.

The function "SPECIAL MAGNIFICATION" enables the operator to enlarge or reduce the original image with a special magnification; the function "IMAGE TREATMENT" enables the operator to modify the original image; the function "AREA DESIGNATION" enables the operator to designate a desired area of the original image for editing: and the function "EXPANDED FUNCTION" enables the operator to have additional editing functions.

If the operator touches one of the numeric touchpads (1)-(4) within the touch-screen portion 35 at the bottom of the display window 34 and presses the function key 32. a corresponding function is selected. As an example, if the operator fingers touchpad (3) and then presses the function key 32, the image editing processor 72 selects "AREA DESIGNATION" function and causes the display window 34 to present an editing type selection menu screen, allowing a choice of a plurality of image editing types as shown in Fig. 5C.

On the editing type selection menu screen are presented the following selective four types:
(1) TRIMMING;
(2) MASKING;
(3) NEGA/POSI INVERSION;
(4) FRAMING;

The type "TRIMMING" enables the operator to remove off a designated area of the original image; the type "MASKING" enables the operator to mask off a designated area of the original image; the type "NEGA/POSI INVERSION" enables the operator to invert white and black portions from each other within a designated area of the original image; and the type "FRAMING" enables the operator to enclose a designated area of the original image with a frame.

Further, there is provided an alternative of canceling the function selection as "CANCEL". If the rightmost touchpad (*) in the touch-screen portion 35 is touched at this point, "AREA DESIGNATION" function is aborted and the function selection menu screen of Fig. 5A is represented, allowing the operator to reselect a desired function.

If the operator fingers one of the touchpads (1)-(4) in the touch-screen portion 35 when the editing type selection menu screen is displayed as shown in Fig. 5C and presses the function key 32, the image editing processor 72 activates a corresponding editing type, causing the display window 34 to present an original document size input screen shown in Fig. 5D. As an example, if touchpad (2) is touched and the function key 32 is pressed, an editing type of "MASKING" is activated and the original document size input screen is displayed as shown in Fig. 5D.

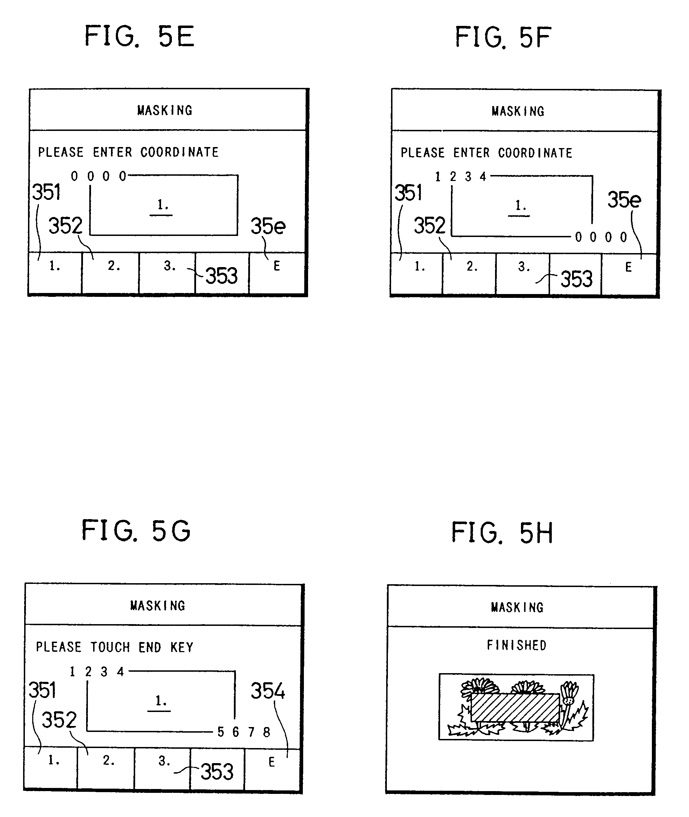

When the original document size input screen is displayed, the image editing processor 72 controls selection of an original document size, causing the display window 34 to show cursor control touchpads 35a-35d and an enter touchpad 35e in the touch-screen portion 35. A selected original document size is enclosed by a highlight box on the display window 34. In Fig. 5D, "A1" size is currently selected. In Fig. 5D, if the cursor control touchpad 35a is touched once, the highlight box moves leftward to "A0" size. On the other hand, if the cursor control touchpad 35b is touched once. the highlight box moves rightward to "A2" size. If the cursor control touchpad 35d is touched in the situation of Fig. 5D, the highlight box moves down to "B2" size. The operator can specify the size of the original document by using the cursor control touchpads 35a-35d in this manner. The selected specified size is made valid when the operator touches the enter touchpad 35e. At this point, the display window 34 presents a coordinate input screen shown in Fig. 5E.

When the coordinate input screen is displayed, the image editing processor 72 controls entry of coordinate data to define an image editing area with the numeric keys 33 and enter touchpad 35e. In Fig. 5E, if the operator enters, for example, "1234" with the numeric keys 33 and touch the enter touchpad 35e, the display window 34 presents a screen shown in Fig. 5F. Similarly, if the operator enters, for example, "5678" with the numeric keys 33 and touch the enter touchpad 35e, the display window 34 presents a screen shown in Fig. 5G.

In this way, the coordinates "1234" and "5678" of two opposite corners of the image editing area are entered. The image editing area defined in this manner corresponds to a rectangular area of which upper-left corner is located within the square numbered "1234" and lower-right corner located within the square numbered "5678" on the editing pad 6.

Area number touchpads 352 and 353 shown in Fig. 5E permit the operator to define two additional image editing areas in a similar way as described above. In this embodiment, there are three area number touchpads 351-353 which make it possible to define three image editing areas for each original document image. The setting for image editing is finished when rightmost end touchpad 354 in the touchscreen portion 35 is touched.

If the original document is larger than the editing pad 6, the image editing processor 72 causes the image forming controller 71 to produce a secondary original document reduced to the size of the editing pad 6. In this case, copying is performed after converting entered coordinates of image editing area(s). The coordinate conversion will be described below.

The memory block 73 includes a RAM (Random-Access Memory) 731 and a ROM (Read-Only Memory) 732. The RAM 731 temporarily stores data such as the size of an original document and coordinates of the image editing area(s) entered by the operator. The ROM 732 stores control programs for the image forming controller 71 and image editing processor 72 as well as a coordinate conversion table used for converting coordinate data when an original document is larger than the editing pad 6. The ROM 732 also stores the size of editing pad 6 so that the ratio of reduction can be calculated when producing a secondary original document from the original document.

The control program for the image editing processor 72 includes a sequence of menu screens to be displayed on the display window 34 in order to guide the operator through a predetermined editing sequence as shown in Figs. 5A-5H and Figs. 7A-7H.

It should be noted that according to the invention, instead of using the editing pad 6 constructed with the transparent sheet 61 and the mounting base 62, a tablet may be used associated with a pointing device such as an electronic stylus. In the use of a tablet, the operator can designate a desired image editing area within an original document image by pointing to appropriate positions on the tablet with the pointing device, and then the image editing processor 72 automatically calculates coordinates of the specified positions.

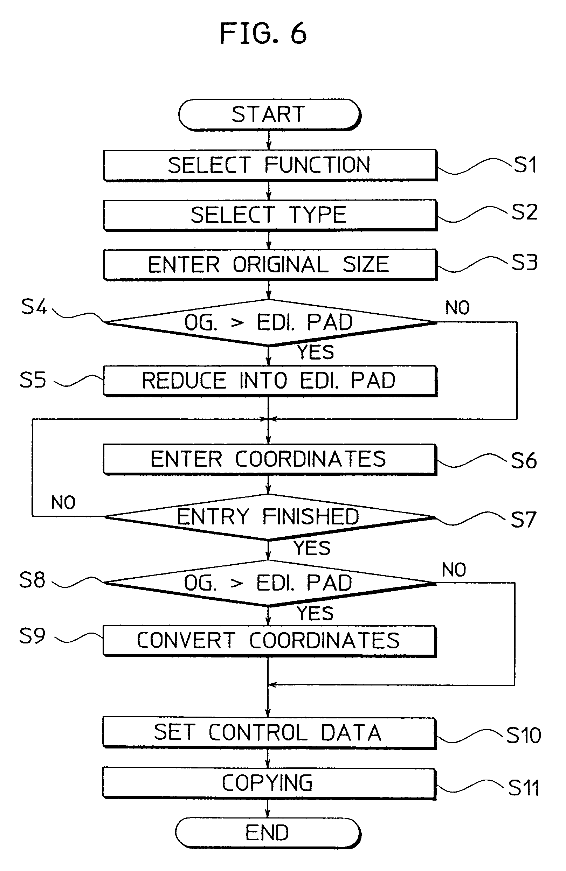

Next, the image editing operations of Figs. 5A-5H will be described with reference to a flowchart of Fig. 6. When the mode key 31 is pressed, the display window 34 presents the function selection menu screen shown in Fig. 5A where the operator can select a desired function by touching one of the numeric touchpads (1)-(4) within the touch-screen portion 35 (Step S1). As an example, if the operator touches the numeric touchpad (3), the touchpad (3) and corresponding function "AREA DESIGNATION" would be highlighted in inverted video as in Fig. 5B. If the function key 32 is pressed at this point, "AREA DESIGNATION" function is activated and the editing type selection menu screen is displayed as shown in Fig. 5C.

Subsequently, the operator selects a desired image editing type by touching one of the numeric touchpads (1)-(4) within the touch-screen portion 35 shown in Fig. 5C (Step S2). As an example, if the operator touches the numeric touchpad (2), the touchpad (2) and corresponding editing type "MASKING" is highlighted in inverted video. If the function key 32 is pressed at this point, "MASKING" type is activated and the original document size input screen is displayed as shown in Fig. 5D.

The operator now specifies the size of the original document by using the cursor control touchpads 35a-35d (Step S3). The specified original document size is enclosed by a highlight box on the display window 34. In Fig. 5D, "A1" size is currently selected. As the operator touches the enter touchpad 35e, the selection of the original document size becomes valid and the display window 34 presents the coordinate input screen as shown in Fig. 5E.

In Step S4, it is judged whether the original document size specified by the operator is larger than the size of the editing pad 6 (Step S4). If the judgment result is in the negative (NO in Step S4), the operator mounts the original document on the editing pad 6 to find coordinates of an area to be masked and enters coordinates via the numeric keys 33 (Step S6).

On the other hand, if the original document is larger than the editing pad 6 (YES in Step S4), the operator sets the original document to the copying machine to produce an secondary original document which is reduced to the size of the editing pad 6 (Step S5). The operator then mounts the secondary original document on the editing pad 6, finds coordinates of an area to be masked and enters coordinates via the numeric keys 33 (Step S6).

In Step S7, it is judged whether there remains another area to be masked. If there remains another area to be masked (NO in Step S7), the operator touches the area number touchpad 352 or 353 and designates the another masking area in the same manner as described above. When entry of coordinates is finished (YES in Step S7), the operator touches the end touchpad 354. The display window 34 provides an on-screen preview of a copied image as shown in Fig. 5H.

In Step S8, it is judged whether the original document is larger than the editing pad 6. If the original document is not larger than the editing pad 6 (NO in Step S8), the operation flow jumps to Step S10. If the original document is larger than the editing pad 6 (YES in Step S8), the coordinates entered in Step S6 are converted to those of the original document based on the coordinate conversion table stored in the ROM 732 (Step S9). For example, in the case that the original document size is "A1", the coordinates are converted from "A2" size to "A1" size in accordance with the coordinate conversion table.

Subsequently, the image forming controller 71 sets control data for the light projecting assembly 44 of the image forming section 4 based on the converted coordinate data (Step S10), and the copying is performed (Step S11). Consequently, a copy image with the specified area(s) masked is obtained.

As seen above, if the original document is larger than the editing pad 6, the operator produces a reduced copy or a secondary original document, and determines coordinates of an image editing area(s) from the secondary original document which is mounted on the editing pad 6, and enters the coordinates into the control unit 7 with numeric keys 33. The image forming section 4 performs image processing, converting the entered coordinate data back to coordinates for the original document image.

With this arrangement, it is no longer necessary to prepare large-sized editing pads or to make available a wide space for storing them. As mentioned in the above description of the embodiment, it is possible to process an image of "A1" size (or even "A0" size) original document using an "A2" size editing pad. Furthermore, it is possible to copy an image on original documents of different sizes with just a single sized editing pad.

In the foregoing embodiment, the menu-assisted user interface is used to guide the operator properly through image editing procedures. The screens are displayed in the predetermined logical manner. Accordingly, it will be unnecessary to provide a large sized display window, but be sufficient to provide the display window 34 of a reduced size.

The coordinate conversion process of Step S9 is not necessarily limited to the one that utilizes the coordinate conversion table stored in the ROM 732. It may be appreciated to render the image editing processor 72 calculate coordinates corresponding to the original document size from the size of the editing pad 6 stored in the ROM 732.

Referring now to Figs. 7A-7H, another menu screen sequence will be described. Figs. 7A-7H show menu screens that will be displayed when "TRIMMING" is selected on the editing type selection menu screen in Step S2 of the flow-chart of Fig. 6. The operating routine is the same as shown in Fig. 6.

Specifically, if the operator selects a desired function on the function selection menu screen (Step S1), a corresponding editing type selection menu screen is displayed as shown in Fig. 7C. If the operator selects "TRIMMING" on the editing type selection menu screen (Step S2), the display window 34 displays an original document size input screen as shown in Fig. 7D. An original document size is specified by the operator (Step S3). Thereafter, the display window 34 displays a coordinate input screen shown in Fig. 7E.

If the original document is larger than the editing pad 6, the operator produces a secondary original document reduced to the size of the editing pad 6 (Steps S4 and S5). The operator mounts the original document or secondary original document on the editing pad 6, finds coordinates of a desired image editing area and enters the coordinates (Steps S6 and S7).

If the original document is larger than the editing pad 6, the coordinates entered in Step S6 are converted (Steps S8, S9). The image forming controller 71 sets control data for the light projecting assembly 44 and the copying operation is performed. Consequently, a copy image with the specified area(s) trimmed is obtained properly (Steps S10, S11).

Similarly, if the type "NEGA/POSI INVERSION" is selected on the editing type selection menu screen in Step S2, the white and black inverted copying is performed in Step S11.

Further, if the type "FRAMING" is selected on the editing type selection menu screen in Step S2, the framed copying is performed in Step S11.

According to the invention, the operator produces a secondary original document reducing the original document by the ratio of the size of the original document to the size of the editing pad 6 if the original document is larger than the editing pad 6, reads out coordinates of image editing areas from the secondary original document by using the editing pad 6, and enters the coordinates into the copying machine. The copying machine converts the entered coordinates to coordinates for the original document image based on the size ratio and applies a selected image editing to the designated area(s). This enables editing a large-sized original document image with a small-sized editing pad. Accordingly, it is no longer necessary to prepare large-sized editing pads or to make available a wide space for storing such editing pads.

## Claims

1. An image forming apparatus comprising:
image reading means (42-45) for reading an image on an original document of a first size;
image processor means (3, 7) for processing the read original image in a desired manner, the image processor means including:
original document holding means (6) for holding an original document, the original document holding means having a coordinate system for defining a specific position of the original document, and the original document holding means having a second size;
image editing means (72) for editing the read original image on the basis of positions defined by the coordinate system of the original document holding means (6);
secondary original document producing means (72, 71, S5) for producing a secondary original document having a size equal or smaller than the second size and carrying a reduced original image, the reduced original image having the same reduction ratio as the secondary original document; and image forming means (40) for forming the processed original image on copy paper.

2. An image forming apparatus as defined in claim 1 wherein the image processor means further includes:
judging means (7, S8) für judging whether the first size is greater than the second size; and
controlling means responsive to the judging means for controlling the secondary original document producing means to produce a secondary original document when the first size is greater than the second size.

3. An image forming apparatus as defined in claim 1 or 2 wherein the image processor means further includes:
conversion means (7, S9) for converting coordinates defining a specific position of the secondary original document to coordinate defining an equivalent position of the original document.

4. An image forming apparatus as defined in claim 3 wherein the conversion means (7, S9) includes:
memory means (732) for storing a coordinate conversion table corresponding to the reduction ratio; and
calculation means (71 ) for calculating the equivalent coordinates of the original document based on the coordinate conversion table.

5. An image forming apparatus as defined in any of claims 1 to 4 wherein the image processor means (3, 7) further includes:
operable means for executing a plurality of selective image processing types;
selecting means (32, 33) for selecting a desired one of the plurality of image processing types; and
displaying means (34, 35) for presenting an operator a screen for image processing type selection.

6. An image apparatus as defined in any of claims 1 to 5, wherein the image processor means (3, 7) further includes:
size input means (72, 34, 35) for inputting the size of the original document.
